# EUROPÄISCHE PATENTSCHRIFT

(11) **EP 2 336 696 B1**
(45) Veröffentlichungstag und Bekanntmachung des Hinweises auf die Patenterteilung: **21.03.2012**
(21) Anmeldenummer: 09015501.1
(22) Anmeldetag: 15.12.2009
(51) Int. Cl.: F28C 1/14

(54) **Modifizierte Hybrid Kühlanlage mit getrennten Kreisläufen**
Modified hybrid cooling assembly with separate circuits
Installation de froid hybride modifiée à circuits séparés

(43) Veröffentlichungstag der Anmeldung: 22.06.2011
(73) Patentinhaber: SPX-Cooling Technologies GmbH, 40882 Ratingen (DE)
(72) Erfinder: Techet, Karoly, 40476 Düsseldorf (DE)
(74) Vertreter: Lang, Friedrich

(56) Entgegenhaltungen:
- EP-A1- 0 770 843
- DE-A1- 2 520 221
- US-A- 3 935 902
- MUELLER W: "OPTIMIERTE WAERMEABFUHR HYBRIDE TROCKENKUEHLUNG" TECHNISCHE RUNDSCHAU, HALLWAG AG, CH, Bd. 82, Nr. 39, 28. September 1990 (1990-09-28), Seiten 38-41, XP000161752 ISSN: 1023-0823

## Beschreibung

Die Erfindung betrifft eine Hybridkühlanlage und insbesondere eine Hybridkühlturm-Anlage gemäß dem Oberbegriff des Anspruchs 1.

Hybridkühlanlagen und insbesondere Hybridkühltürme der betreffenden Art werden vorrangig in Kraftwerken zur Abkühlung erwärmten Kühlwassers mittels von Umgebungsluft eingesetzt. Bei einem Hybridkühlturm wird den in einer Nasskühleinheit erzeugten Schwaden vor dem Verlassen des Kühlturms ein warmer, in einer Trockenkühleinheit erzeugter Luftstrom beigemischt, wodurch sichtbare Schwaden vermieden werden, wie in der EP 314 945 A2 beschrieben. Das im Kondensator aufgewärmte Kühlwasser wird zuerst in die Trockenkühleinheit der Hybrid Kühlanlage geführt, um bessere thermodynamische Wärmeübertragung erreichen zu können. Hybridkühltürme weisen daher einen hohen Wirkungsgrad und/oder eine hohe Kühlleistung auf, bei verhältnismäßig geringem Wasserverbrauch.

Je nach Ausführungsart wird der abzukühlende Kühlwasserstrom seriell zunächst durch die Trockenkühleinheiten (bzw. Trockenkühlelemente) und anschließend durch die Nasskühleinheiten (Nasskühlelemente) geführt, oder parallel auf die unterschiedlichen Kühleinheiten aufgeteilt. Aus der DE 197 54 995 A1 (vgl. Fig. 1) ist eine Kombination beider Ausführungsarten bekannt.

Vergleichbare Hybridkühlanlagen sind des Weiteren aus der DE 25 20 221 A1 und der EP0 770 843 A1 bekannt.

Nachteilig ist, dass die Wärmetauscher der Trockenkühleinheiten wasserseitig einer starken Korrosion ausgesetzt sind und daher regelmäßig gewartet und/oder deren Wärmetauschrohre aus teuren Materialien, wie z. B. aus hochlegierten Stählen und/oder Edelstählen oder auch Titan, gefertigt werden müssen.

Diese Aufgabe wird gelöst von einer Hybridkühlanlage gemäß den Merkmalen des Anspruchs 1. Vorteilhafte und bevorzugte Weiterbildungen sind Gegenstand der abhängigen Ansprüche. Die Lösung der Aufgabe erstreckt sich auch auf ein Verfahren zum Betrieb bzw. auf ein Betriebsverfahren gemäß dem nebengeordneten Anspruch und dessen Weiterbildungen.

Die Aufgabe der Erfindung ist es, hier Abhilfe zu schaffen. Die Vorteile der Erfindung bestehen darin, dass es durch die getrennten Wasserkreisläufe möglich ist, die empfindlichen wasserseitigen Oberflächen der Trockeneinheiten mit Kraftwerk Wasserkreislauf von niedriger Korrosionsgefahr zu betreiben, da das Kraftwerk Wasserkreislauf wegen niedrigen Leitfähigkeiten, niedrigen Salzkonzentrationen und niedriger Sauerstoffkonzentration nicht korrosionsfähig ist. Da in diesem Fall die Korrosionsgefahr niedrig ist, ist es möglich, normalen Stahl als Rohmaterial in der Trockeneinheit zu installieren, so dass die Investitionskosten wesentlich reduziert werden können. Da die Trockeneinheiten mit nichtkorrosiven Kraftwasser betrieben sind, erfolgt keine Ablagerung auf der Rippenrohrinnenseite, so dass bessere thermodynamische Verhältnisse erreicht werden können (ein reduzierter "fouling factor" kann bei der Auslegung des Trockenteils berücksichtigt werden).

Eine erfindungsgemäße Hybridkühlanlage umfasset wenigstens einen Hybridkühlturm oder eine funktionsgleiche Baueinheit, mit wenigstens einer Trockenkühleinheit für den mittelbaren Wärmetausch zwischen Kühlwasser (oder einem sonstigen flüssigen Medium) und zuströmender Umgebungsluft (oder einem sonstigen gasförmigen Medium) und wenigstens einer Nasskühleinheit für den unmittelbaren Wärmetausch zwischen Kühlwasser und zuströmender Umgebungsluft. Es ist vorgesehen, dass die prockenkühleinheit und die Nasskühleinheit in separate, voneinander getrennte Kühlkreisläufe eingebunden sind. Eine erfindungsgemäße Hybridkühlanlage ist insbesondere eine Hybridkühlturm-Anlage.

Ein Kühlkreislauf kann als ein zirkulärer Strömungsweg des Kühlwassers durch ein System von Verrohrungen und Wärmetauscherelementen aufgefasst werden. Bevorzugt sind exakt zwei separierte und voneinander getrennte Kühlkreisläufe vorgesehen, wobei die Trockenkühleinheit bzw. die Trockenkühleinheiten zu einem ersten Kühlkreislauf und die Nasskühleinheit bzw. die Nasskühleinheiten zu einem zweiten Kühlkreislauf gehört bzw. gehören.

Der Erfindung liegt die Erkenntnis zugrunde, dass die korrosive Wirkung des Kühlwassers in einem erheblichen Maß durch den offenen bzw. unmittelbaren Wärmetausch in einer Nasskühleinheit und dem darin erfolgenden Kontakt mit der Umgebungsluft bedingt ist. Die korrosive Neigung des Kühlwassers fällt somit erheblich geringer aus, so dass Wartungsmaßnahmen reduziert oder die Wärmetauschrohre der Trockenkühleinheit aus einem kostengünstigeren Werkstoff hergestellt werden könne, was Gegenstand einer bevorzugten Weiterbildung ist.

Durch separierte Kühlkreisläufe kann zudem, je nach Ausführung, eine Verbesserung des Wirkungsgrads und/oder eine Erhöhung der Kühlleistung erreicht werden. Zudem kann je nach Ausführung eine bauliche Verkleinerung der Trockeneinheit bzw. der zur Trockeneinheit gehörenden Wärmetauscher erreicht werden.

Gemäß einer bevorzugten Weiterbildung ist vorgesehen, dass der Kühlkreislauf für die Trockenkühleinheit ein geschlossener Kühlkreislauf ist. Hierdurch kann ein kritischer Kontakt zwischen der Umgebungsluft und dem in der Trockeneinheit fließendes Kühlmedium (Kraftwerkwasser) verhindert werden. Zudem tritt kein Verlust von Kühlwasser in der Trockeneinheit auf. Ferner ist es möglich, dem Kühlwasser in diesem geschlossenen Kühlkreislauf Additive beizumischen.

Gemäß einer bevorzugten Weiterbildung ist vorgesehen, dass die Hybridkühlanlage einen Ausgleich/Füllungs-Tank für den geschlossenen Kühlkreislauf umfasst. Ein konstantes Wasserniveau soll in diesem Ausgleich/Füllung Tank gehalten werden.
Es ist vorgesehen, dass die Hybridkühlanlage ferner wenigstens einen Dampfkondensator zur Kondensation eines Turbinendampfes umfasst, der in den Kühlkreislauf der Trockenkühleinheit eingebunden ist, und dass wenigstens ein separater Dampfkondensator umfasst ist, der in den Kühlkreislauf der Nasskühleinheit eingebunden ist. Hierbei ist vorgesehen, dass der von der Turbine kommende Abdampf auf parallele Teilströme zu diesen separaten Dampfkondensatoren aufgeteilt wird. Bei dem Turbinendampf handelt es sich um den von einer Dampfturbine kommenden Abdampf. Die Dampfturbine selbst ist eine Einrichtung zur Wandlung einer im Dampf enthaltenen Wärme in mechanische Energie. Der Dampfkondensator ist eine Wärmetauschereinheit, die das im Abdampf enthaltende Wasser von der gasförmigen Phase in die flüssige Phase überführt. Die während der Kondensation des Abdampfes innerhalb des Dampfkondensators freigesetzte Wärme wird an das die separaten Kühlkreisläufe durchströmende Kühlwasser abgegeben.

Gemäß einer bevorzugten Weiterbildung ist vorgesehen, dass hierbei der zum Kühlkreislauf der Trockenkühleinheit gehörende Dampfkondensator eine offene Wärmetauschereinrichtung (wie obenstehend erläutert) aufweist und dass der zum Kühlkreislauf der Nasskühleinheit gehörende Dampfkondensator eine geschlossene Wärmetauschereinrichtung (wie obenstehend erläutert) aufweist. Insbesondere ist vorgesehen, dass wenigstens eine - und bevorzugt jede - dieser Wärmetauschereinrichtungen in einem vom Turbinendampf durchströmten Wärmetauschergehäuse angeordnet ist, wobei der Innenraum eines Wärmetauschergehäuses vakuumiert bzw. vakuumierbar ist.

Gemäß einer bevorzugten Weiterbildung ist vorgesehen, dass die Hybridkühlanlage ferner wenigstens eine vakuumerzeugende Einrichtung umfasst. Eine vakuumerzeugende Einrichtung ist z. B. eine Vakuumpumpe oder eine funktionsgleiche Einrichtung, die mittels eines Rohrleitungssystems mit den betreffenden Komponenten verbunden ist.

Gemäß einer bevorzugten Weiterbildung ist vorgesehen, dass die Wärmetauschrohre oder Rohrbündel wenigstens eines zur Trockenkühleinheit gehörenden Wärmetauschers aus einem gewöhnlichen Stahlwerkstoff oder Aluminiumwerkstoff gebildet sind. Dies wird dadurch ermöglicht, dass in dem zur Trockenkühleinheit gehörenden Kühlkreislauf bzw. in dem Kühlkreislauf für die Trockenkühleinheit kein kritischer Wärmetausch in einer der Umgebungsluft ausgesetzten Nasskühleinheit erfolgt und somit das Kühlwasser in diesem Kühlkreislauf weniger korrosiv wirkt. Gewöhnliche Stahlwerkstoffe sind insbesondere keine hochlegierten Stähle und/oder keine Edelstähle (rost- und/oder säurebeständige Stähle). Gegenüber diesen Stähle weisen gewöhnliche Stahlwerkstoffe in der Regel auch bessere Wärmeleiteigenschaften auf.

Die Erfindung erstreckt sich auch auf ein Verfahren zum Betrieb einer Hybridkühlanlage mit wenigstens einer Trockenkühleinheit und wenigstens einer Nasskühleinheit, wobei es sich bevorzugt um eine Hybridkühlanlage und insbesondere um eine Hybridkühlturm-Anlage gemäß wenigstens einem Aspekt der vorausgehenden Erläuterungen handelt. Es ist vorgesehen, dass die Trockenkühleinheit und die Nasskühleinheit durch separate, voneinander getrennte Kühlwasserströme beaufschlagt werden. Bevorzugte Weiterbildungen dieses Verfahrens ergeben sich analog zu den vorausgehenden Erläuterungen, wobei Anlagenmerkmale zugleich auch Verfahrensmerkmale sind und umgekehrt.

Nachfolgend wird die Erfindung anhand von in der Zeichnung dargestellten Ausführungsbeispielen weiter beschrieben. Es zeigen schematisch:
- Fig. 1: eine bekannte Hybridkühlanlage; und
- Fig. 2: eine erfindungsgemäße Hybridkühlanlage.

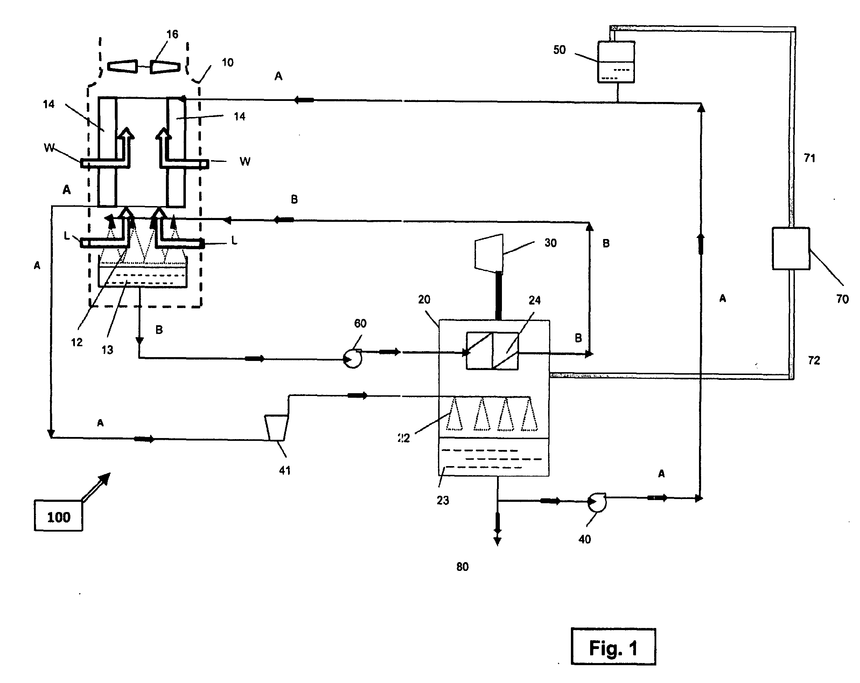

Figur 1 zeigt eine insgesamt mit 100 bezeichnete Hybridkühlanlage gemäß einem ersten Ausführungsbeispiel, wobei es sich um eine Hybridkühlturm-Anlage handelt. Der Kühlturm 10 ist ein Hybridkühlturm, der im unteren Bereich eine aus einer Verrieselungsanlage bestehende Nasskühleinheit 12 und im oberen Bereich eine aus mehreren Wärmetauschern bestehende Trockenkühleinheit 14 aufweist. Den in der Nasskühleinheit 12 erzeugten und im Hybridkühlturm 10 aufsteigenden Schwaden werden vor dem Austritt aus dem Hybridkühlturm 10 warme, in der Trockenkühleinheit 14 erzeugte Luftströme W aus der Umgebungsluft beigemischt, wodurch am oberen Auslass des Hybridkühlturms 10 sichtbare Schwaden vermieden werden. Zudem wird durch diese Maßnahmen der Gesamtwirkungsgrad verbessert. Mit L sind die im unteren Bereich des Hybridkühlturms 10 aus der Umgebungsluft angesaugten Luftströme für die Nasskühleinheit 12 bezeichnet. Im oberen Bereich des Hybridkühlturms 10 ist eine Ventilationseinrichtung 16 zur Erzeugung und/oder Aufrechterhaltung der Strömung im Hybridkühlturm 10 angeordnet.

Zur Hybridkühlanlage 100 gehört ferner ein Dampfkondensator 20, in welchem der Abdampf einer Dampfturbine 30 kondensiert wird, wobei die freigegebene Kondensationswärme durch Kühlmittel abgeführt und über die Kühleinheiten 12 und 14 im Hybridkühlturm 10 an die Umgebungsluft abgegeben wird. Die Wärmetauscher der Trockenkühleinheit 14 und die der Nasskühleinheit 12 sind in separate, voneinander getrennte Kühlkreisläufe A und B eingebunden, wie nachfolgend näher erläutert.

Für den ersten Kühlkreislauf A ist innerhalb des Dampfkondensators 20 eine als Verrieslungsanlage ausgeführte, offene Wärmetauschereinrichtung 22 für eine unmittelbare bzw. direkte Wärmeübertragung von dem Turbinendampf auf das Kühlwasser des Kühlkreislaufs A vorgesehen. Ferner ist eine offene Wärmetauschereinrichtung verhältnismäßig kostengünstig. Das in einem Auffangbecken 23 angesammelte und vom Turbinendampf erwärmte Kühlwasser wird mittels einer Pumpeneinrichtung 40 abgepumpt und über den rechten Rohrleitungsarm den geschlossenen Wärmetauschern der Trockenkühleinheit 14 am Hybridkühlturm 10 zugeführt, wo ein Wärmetausch erfolgt, bei dem die angesaugte Umgebungsluft W erwärmt und das Kühlwasser des Kühlkreislaufs A abgekühlt wird. Von den Wärmetauschern der Trockenkühleinheit 14 erfolgt eine Rückführung des nun abgekühlten Kühlwassers zu dem Dampfkondensator 20 über den linken Rohrleitungsarm. Da im Kondensatorraum Vakuum herrscht, soll eine Druckdrosselungseinrichtung (41) in dem Rücklauf eingebaut werden.

Bei dem Kühlkreislauf A handelt es sich um einen bezüglich der Umgebungsluft geschlossenen Kühlkreislauf. Hierzu ist anzumerken, dass sich die offene Wärmetauschereinrichtung 22 des Dampfkondensators 20 in einem geschlossenen, nur vom Turbinendampf durchströmten Wärmetauschergehäuse (Shell) 21 befindet. Das Kühlwasser des Kühlkreislaufs A kommt somit nicht mit der Umgebungsluft in Kontakt und ist daher nur bedingt korrosiv. Zudem kann das Kühlwasser in diesem geschlossenen Kühlkreislauf mit Additiven versehen werden. Aufgrund dieser nur bedingt korrosiven Neigung des Kühlwassers können die Rohrleitungen (und sonstige Komponenten des Rohrleitungssystems), insbesondere aber die Wärmetauschrohre der Wärmetauscher der Trockenkühleinheit 14 aus einem einfachen Stahl- oder Aluminiumwerkstoff hergestellt werden, wie bereits obenstehend erläutert.

Mit 50 ist ein Ausgleichstank für den geschlossenen Kühlkreislauf A bezeichnet. Dieser Ausgleichstank 50 dient bei Kühlwasserverlust als Reservoir für thermische Ausdehnungen des Kühlwassers in dem geschlossenen Kühlkreislauf A und als Füllungstank des Trockenteils. In diesem Tank muss ein konstantes Niveau gehalten werden.

Für den zweiten Kühlkreislauf B ist innerhalb des Dampfkondensators 20 eine geschlossene Wärmetauschereinrichtung 24 für eine mittelbare bzw. indirekte Wärmeübertragung von dem Turbinendampf auf das Kühlwasser dieses zweiten Kühlkreislaufs vorgesehen. Eine solche geschlossene Wärmetauschereinrichtung 24 ist insbesondere ein Oberflächenkondensator. Das in der Wärmetauschereinrichtung 24 vom Turbinendampf erwärmte Kühlwasser wird über den rechten Rohrleitungsarm der als Verrieselungsanlage ausgeführten Nasskühleinheit 12 im Hybridkühlturm 10 zugeführt, wo ein Wärmetausch erfolgt, bei dem die angesaugte Umgebungsluft L erwärmt und das im Gegenstrom nach unten fallende Kühlwasser des Kühlkreislaufs B abgekühlt wird und sich im unteren Auffangbecken 13 des Hybridkühlturms 10 sammelt. Vom Auffangbecken 13 wird das abgekühlte Kühlwasser des zweiten Kühlreislaufs B mittels einer Pumpeneinrichtung 60 abgepumpt und dem Dampfkondensator 20 über den linken Rohrleitungsarm wieder zugeführt. Bei dem Kühlkreislauf B handelt es sich um einen offenen Kühlkreislauf, bei dem das Kühlwasser im Hybridkühlturm 10 mit der Umgebungsluft in direkten Kontakt gelangt. Der Verdampfungsanteil wird durch Frischwassereinspeisung ausgeglichen.

Die separaten Wärmetauschereinrichtungen 22 und 24 des Dampfkondensators 20 sind in einem gemeinsamen, vom Turbinendampf durchströmten und gegenüber der Umgebungsluft abgedichteten Wärmetauschergehäuse 21 angeordnet. Wegen der hohen thermodynamischen Effizienz der offenen Wärmetauschereinrichtung 22 kann die geschlossene Wärmetauschereinrichtung 24 klein und das Wärmetauschergehäuse 21 baulich sehr kompakt ausgeführt werden. Der aus dem Dampfkondensator 20 abströmende Gasvolumenstrom kann einer Luftvorwärmung (nicht dargestellt) zugeführt werden. Das Kondensat des Turbinendampfes wird über eine nicht dargestellte Entnahmeleitung aus dem Innenraum des Dampfkondensators 20 abgeführt.

Der Innenraum des Wärmetauschergehäuses 21 ist vakuumiert, wodurch der Wirkungsgrad der Dampfturbine 30 erhöht werden kann, wodurch aber auch ein Kontakt des zum ersten Kühlkreislauf A gehörenden Kühlwassers mit der Umgebungsluft verhindert wird. Aus dem gleichen Grund ist auch der Ausgleichstank 50 vakuumiert. Hierzu umfasst die Hybridkühlanlage 100 eine vakuumerzeugende Einrichtung 70, die über ein Rohrleitungssystem 71 und 72 mit dem Ausgleichstank 50 und mit dem Wärmetauschergehäuse 21 des Dampfkondensators 20, bzw. dessen Innenraum, verbunden ist.

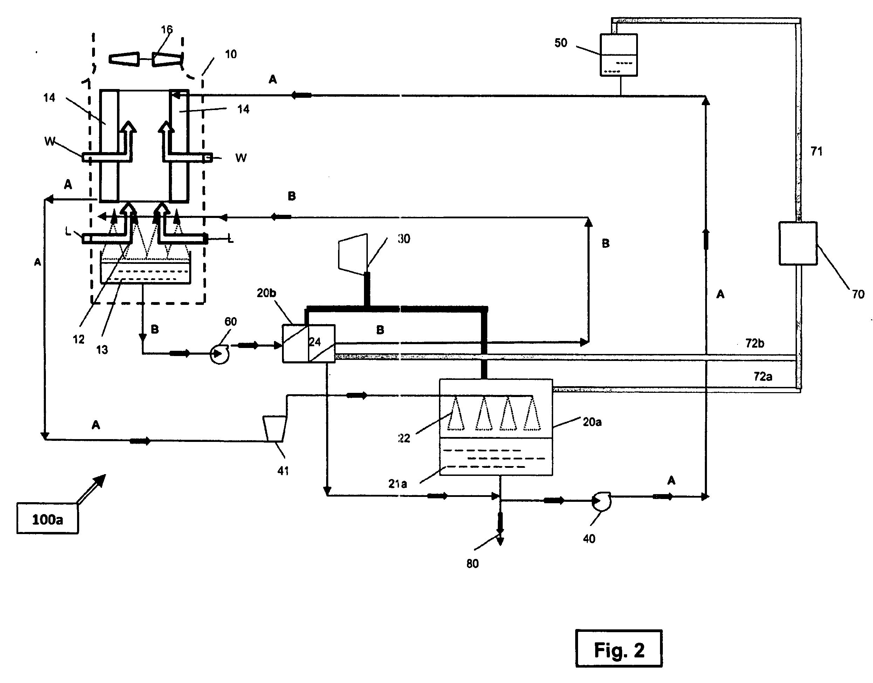

Fig. 2 zeigt ein alternatives Ausführungsbeispiel einer insgesamt mit 100a bezeichneten Hybridkühlanlage. Gleiche Komponenten sind mit gleichen Bezugszeichen benannt. Im Unterschied zum Ausführungsbeispiel der Figur 1 sind hier zwei separate Dampfkondensatoren 20a und 20b vorgesehen, wobei der erste Dampfkondensator 20a in den ersten Kühlkreislauf A und der zweite Dampfkondensator 20b in den zweiten Kühlkreislauf B eingebunden ist. Der von der Dampfturbine 30 kommende Turbinendampf wird parallel auf beide Dampfkondensatoren 20a und 20b aufgeteilt, wobei diese Aufteilung definiert und insbesondere geregelt erfolgt.

Der erste Dampfkondensator 20a umfasst eine offene, als Verrieselungsanlage ausgebildete Wärmtauschereinrichtung 22, die für die Wärmeübertragung von dem Turbinendampf auf das Kühlwasser des Kühlkreislaufs A vorgesehen ist. Die Wärmtauschereinrichtung 22 ist in einem Wärmetauschergehäuse 21 a angeordnet. Der zweite Dampfkondensator 20b umfasst eine geschlossene Wärmetauschereinrichtung 24, die für die Wärmeübertragung vom Turbinendampf auf das Kühlwasser des Kühlkreislaufs B vorgesehen ist. Die Wärmetauschergehäuse 21 a und 21 b können baulich getrennt oder auch baulich zusammengefasst sein. Die Innenräume der Wärmetauschergehäuse 21 a und 21 b sind über die Rohrleitungen 72a und 72b vakuumiert.

Ein Vorteil dieser Ausführung ist darin zu sehen, dass die Kondensation des Turbinendampfes und die Kühlleistung sehr gut geregelt bzw. eingestellt werden kann. Durch eine bessere Wärmeverteilung auf die Trockenkühleinheit und die Nasskühleinheit kann die Regelung eines schwadenfreien (plume free) Abgangs erleichtert, sowie eine Verbesserung des Wirkungsgrads und/oder eine Erhöhung der Kühlleistung erreicht werden.

## Patentansprüche

1. Hybridkühlanlage (100), insbesondere Hybridkühlturm-Anlage, umfassend wenigstens einen Hybridkühlturm (10) mit:
wenigstens einer Trockenkühleinheit (14) für den mittelbaren Wärmetausch zwischen Kühlwasser und zuströmender Umgebungsluft (W), und
wenigstens einer Nasskühleinheit (12) für den unmittelbaren Wärmetausch zwischen Kühlwasser und zuströmender Umgebungsluft (L), wobei die Trockenkühleinheit (14) und die Nasskühleinheit (12) in separate, voneinander getrennte Kühlkreisläufe (A, B) eingebunden sind,
**dadurch gekennzeichnet,**
**dass** ferner ein Dampfkondensator (20a) umfasst ist, der in den Kühlkreislauf (A) der Trockenkühleinheit (14) eingebunden ist, und dass ein separater Dampfkondensator (20b) umfasst ist, der in den Kühlkreislauf (B) der Nasskühleinheit (12) eingebunden ist, und wobei die Aufteilung des zu kühlenden Abdampfes auf die beiden Dampfkondensatoren (20a, 20b) definiert und insbesondere geregelt erfolgt.

2. Hybridkühlanlage (100) gemäß Anspruch 1,
**dadurch gekennzeichnet,**
**dass** der Kühlkreislauf (A) der Trockenkühleinheit (14) ein geschlossener Kühlkreislauf ist aber mit der Betrachtung der Hydraulik ist dieser Kühlkreislauf ein offenes System.

3. Hybridkühlanlage (100) gemäß Anspruch 2,
**dadurch gekennzeichnet,**
**dass** ferner ein Ausgleichstank (50) für den geschlossenen Kühlkreislauf (A) umfasst ist.

4. Hybridkühlanlage (100a) gemäß Anspruch 1,
**dadurch gekennzeichnet,**
**dass** der zum Kühlkreislauf (A) der Trockenkühleinheit (14) gehörende Dampfkondensator (20a) eine offene Wärmetauschereinrichtung (22) aufweist und dass der zum Kühlkreislauf (B) der Nasskühleinheit (12) gehörende Dampfkondensator (20b) eine geschlossene Wärmetauschereinrichtung (24) aufweist.

5. Hybridkühlanlage (100a) gemäß Anspruch 4,
**dadurch gekennzeichnet,**
**dass** wenigstens eine Wärmetauschereinrichtung (20a; 20b) in einem vom Turbinendampf durchströmten Wärmetauschergehäuse (21 a; 21b) angeordnet ist, wobei der Innenraum des Wärmetauschergehäuses (21 a; 21 b) vakuumiert ist.

6. Hybridkühlanlage (100) gemäß einem der vorhergehenden Ansprüche 3 oder 4,
**dadurch gekennzeichnet,**
**dass** ferner eine vakuumerzeugende Einrichtung (70) umfasst ist.

7. Hybridkühlanlage (100) gemäß einem der vorhergehenden Ansprüche,
**dadurch gekennzeichnet,**
**dass** die Wärmetauschrohre eines zur Trockenkühleinheit (14) gehörenden Wärmetauschers aus einem gewöhnlichen Stahlwerkstoff gebildet sind.

8. Verfahren zum Betrieb einer Hybridkühlanlage mit wenigstens einer Trockenkühleinheit (14) und wenigstens einer Nasskühleinheit (12), insbesondere einer Hybridkühlanlage (100) gemäß einem der vorausgehenden Ansprüche,
**dadurch gekennzeichnet,**
**dass** die Trockenkühleinheit (14) und die Nasskühleinheit (12) durch separate, voneinander getrennte Kühlwasserströme (A, B) beaufschlagt werden, und wobei ferner ein Dampfkondensator (20a) umfasst ist, der in den Kühlkreislauf (A) der Trockenkühleinheit (14) eingebunden ist, und dass ein separater Dampfkondensator (20b) umfasst ist, der in den Kühlkreislauf (B) der Nasskühleinheit (12) eingebunden ist, und wobei die Aufteilung des zu kühlenden Abdampfes auf die beiden Dampfkondensatoren (20a, 20b) definiert und insbesondere geregelt erfolgt.

## Claims

1. A hybrid cooling plant (100), in particular a hybrid cooling tower plant, comprising at least one hybrid cooling tower (10) comprising:
at least one dry cooling unit (14) for the indirect heat exchange between cooling water and inflowing ambient air (W), and
at least one wet cooling unit (12) for the direct heat exchange between coolant water and inflowing ambient air (L), wherein the dry cooling unit (14) and the wet cooling unit (12) are incorporated in separate cooling circuits (A, B), which are partitioned from one another,
**characterized in that**
the hybrid cooling plant (100) further comprises a steam condenser (20a), which is incorporated in the cooling circuit (A) of the dry cooling unit (14), and a separate steam condenser (20b), which is incorporated in the cooling circuit (B) of the wet cooling unit (12), and wherein the distribution of the exhaust steam to be cooled to the two steam condensers (20a, 20b) occurs in a defined and particularly regulated manner.

2. The hybrid cooling plant (100) according to Claim 1,
**characterized in that**
the cooling circuit (A) of the dry cooling unit (14) is a closed cooling circuit, but this cooling circuit is an open system in consideration of the hydraulics.

3. The hybrid cooling plant (100) according to Claim 2,
**characterized in that**
it also comprises a compensation tank (50) for the closed cooling circuit (A).

4. The hybrid cooling plant (100a) according to Claim 1,
**characterized in that**
the steam condenser (20a) belonging to the cooling circuit (A) of the dry cooling unit (14) has an open heat exchanger apparatus (22), and the steam condenser (20b) belonging to the cooling circuit (B) of the wet cooling unit (12) has a closed heat exchanger apparatus (24).

5. The hybrid cooling plant (1 00a) according to Claim 4,
**characterized in that**
at least one heat exchanger apparatus (20a; 20b) is situated in a heat exchanger housing (21 a; 21 b), which turbine steam flows through, the inner chamber of the heat exchanger housing (21 a; 21 b) being vacuumed.

6. The hybrid cooling plant (100) according to one of preceding Claims 3 or 4,
**characterized in that**
it also comprises a vacuum-generating apparatus (70).

7. The hybrid cooling plant (100) according to one of the preceding claims,
**characterized in that**
the heat exchanger pipes of a heat exchanger belonging to the dry cooling unit (14) are formed from a typical steel material.

8. A method for operating a hybrid cooling plant having at least one dry cooling unit (14) and at least one wet cooling unit (12), in particular a hybrid cooling plant (100) according to one of the preceding claims,
**characterized in that**
the dry cooling unit (14) and the wet cooling unit (12) are fed by separate cooling water streams (A, B), which are partitioned from one another, and wherein the hybrid cooling plant (100) further comprises a steam condenser (20a), which is incorporated in the cooling circuit (A) of the dry cooling unit (14), and a separate steam condenser (20b), which is incorporated in the cooling circuit (B) of the wet cooling unit (12), and wherein the distribution of the exhaust steam to be cooled to the two steam condensers (20a, 20b) occurs in a defined and particularly regulated manner.

## Revendications

1. Installation de refroidissement hybride (100), en particulier installation de tour de refroidissement hybride, comprenant au moins une tour de refroidissement hybride (10), avec:
au moins une unité de refroidissement à sec (14) pour l'échange de chaleur indirect entre l'eau de refroidissement et l'air ambiant amené (W), et
au moins une unité de refroidissement par voie humide (12) pour l'échange de chaleur direct entre l'eau de refroidissement et l'air ambiant entrant (L), dans laquelle l'unité de refroidissement à sec (14) et l'unité de refroidissement par voie humide (12) sont intégrées dans des circuits de refroidissement (A, B) distincts et séparés l'un de l'autre,
**caractérisée en ce**
**qu'**elle comprend en outre un condenseur de vapeur (20a) qui est intégré dans le circuit de refroidissement (A) de l'unité de refroidissement à sec (14) et en ce qu'elle comprend un condenseur de vapeur (20b) séparé, qui est intégré dans le circuit de refroidissement (B) de l'unité de refroidissement par voie humide (12), et dans laquelle la répartition de la vapeur sortante à refroidir vers les deux condenseurs de vapeur (20a, 20b) est réalisée de manière définie, et en particulier de manière régulée.

2. Installation de refroidissement hybride (100) selon la revendication 1,
**caractérisée en ce**
**que** le circuit de refroidissement (A) de l'unité de refroidissement à sec (14) est un circuit de refroidissement fermé mais ce circuit de refroidissement est un système ouvert du point de vue hydraulique.

3. Installation de refroidissement hybride (100) selon la revendication 2,
**caractérisée en ce**
**qu'**elle comprend en outre un réservoir de compensation (50) pour le circuit de refroidissement fermé (A).

4. Installation de refroidissement hybride (100a) selon la revendication 1,
**caractérisée en ce**
**que** le condenseur de vapeur (20a) appartenant au circuit de refroidissement (A) de l'unité de refroidissement à sec (14) présente un dispositif d'échangeur de chaleur ouvert (22) et en ce que le condenseur de vapeur (20b) appartenant au circuit de refroidissement (B) de l'unité de refroidissement par voie humide (12) présente un dispositif d'échangeur de chaleur fermé (24).

5. Installation de refroidissement hybride (100a) selon la revendication 4,
**caractérisée en ce**
**qu'**au moins un dispositif d'échangeur de chaleur (20a ; 20b) est disposé dans un corps d'échangeur de chaleur (21 a ; 21 b) parcouru par la vapeur de la turbine, et dans laquelle le vide est créé à l'intérieur du corps d'échangeur de chaleur (21 a ; 21 b).

6. Installation de refroidissement hybride (100) selon l'une des revendications 3 ou 4,
**caractérisée en ce**
**qu'**elle comprend en outre un dispositif de génération de vide (70).

7. Installation de refroidissement hybride (100) selon l'une des revendications précédentes,
**caractérisée en ce**
**que** les tubes d'échangeur de chaleur d'un échangeur de chaleur appartenant à l'unité de refroidissement à sec (14) sont faits d'un matériau à base d'acier usuel.

8. Procédé de pilotage d'une installation de refroidissement hybride avec au moins une unité de refroidissement à sec (14) et au moins une unité de refroidissement par voie humide (12), en particulier d'une installation de refroidissement hybride (100) selon l'une des revendications précédentes, **caractérisé en ce**
**que** l'unité de refroidissement à sec (14) et l'unité de refroidissement par voie humide (12) sont exposées à des flux d'eau de refroidissement (A, B) distincts et séparés l'un de l'autre, et qui comprend en outre un condenseur de vapeur (20a) qui est intégré dans le circuit de refroidissement (A) de l'unité de refroidissement à sec (14), et en ce qu'elle comprend un condenseur de vapeur (20b) séparé qui est intégré dans le circuit de refroidissement (B) de l'unité de refroidissement par voie humide (12), et dans lequel la répartition de la vapeur de sortie à refroidir vers les deux condenseurs de vapeur (20a, 20b) est réalisée de manière définie, et en particulier de manière régulée.
